# EUROPEAN PATENT APPLICATION

(11) **EP 4 790 600 A1**
(43) Date of publication of application: **12.08.2026**
(21) Application number: 25157170.9
(22) Date of filing: 11.02.2025
(51) Int. Cl.: G06N 10/60, G06N 3/048, G06N 3/084

(54) **SHOT-BASED QUANTUM ENCODING OF DATA POINTS FOR PROCESSING BY A QUANTUM CIRCUIT**

(71) Applicant: Terra Quantum AG, 9000 St. Gallen (CH)
(72) Inventor: Kyriacou, Basil, 9000 St. Gallen (CH); Melnikov, Alexey, 9000 St. Gallen (CH)
(74) Representative: Lucke, Andreas

(57) **Abstract**

The present disclosure relates to a method, a processing system, a hybrid quantum-classical computing system and a computer program for encoding a data point for processing by a quantum circuit. The method comprises mapping the data point onto a weight distribution assigning a respective weight to each of a set of initial states for the quantum circuit; for some or all of the initial states, repeatedly running the quantum circuit using the respective initial state as an input to the quantum circuit to determine a measurement outcome of an observable for the respective initial state based on an output of the quantum circuit; and determining a processing result for the data point based on the determined measurement outcomes and the weight distribution.

## Description

### FIELD OF THE INVENTION

The present invention is in the field of quantum computing and relates to a method and systems for encoding a data point for processing by a quantum circuit.

### BACKGROUND

Quantum computers provide a platform of controllable quantum mechanical systems whose state and, optionally, interaction can be controlled in order to perform a computation. The computation is realized by a deterministic evolution of the controllable quantum mechanical systems, e.g. qubits as quantum analogues of classical bits, and the state of the quantum mechanical systems can be measured to determine the outcome of the computation.

Control operations on these qubits are termed quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of a quantum spin system (e.g., an electron) by a selectable value, e.g. π/2. A multi-qubit gate may coherently act on two or more qubits, such as a coherent CNOT operation on the state of two qubits. A plurality of quantum gates can be applied to the qubits of the quantum computer in parallel or in sequence for performing a computation. The state of the qubits may be measured repeatedly after applying a sequence of quantum gates to determine the probabilities for each possible outcome of the computation.

In essence, the operation of a quantum computer may be considered to rely on the encoding of an (e.g., classical) data point into the internal quantum state of the qubits, followed by a multiplication of the internal quantum state of the qubits with an operator (a matrix), which can be implemented by a combination of different quantum gates, and a measurement of the resulting outcome. In order to compute solutions to problems which are considered intractable on classical computers, a quantum computer can leverage the special properties of quantum mechanical states, in particular the superposition and entanglement of different quantum states, to find solutions with a comparatively low number of calculation steps and/or qubits. Moreover, since the quantum operations can create complex superposition states of the qubits, a quantum computer in principle has access to a large internal memory for processing computational states.

The successes of quantum computing in the past decade have laid the foundations for quantum machine learning (QML), where variational quantum circuits (also referred to as parametrized quantum circuits) having a number of variable (and thus trainable) parameters are used as part of machine learning procedures. Quantum neural networks implemented by such variational quantum circuits may have higher trainability, capacity, and generalizability than their classical counterparts (cf. A. Abbas et al., The power of quantum neural networks, Nature Computational Science 1, 403-409 (2021*)*). Thus, advantages of quantum computing may be transferred to the field of machine learning, making machine learning potentially scalable beyond classical bounds.

Quantum neural networks generally require a quantum encoding procedure (also referred to as embedding), wherein classical input data (e.g., training data) is encoded in a quantum state as input for the quantum circuit. Conventionally, such encoding is achieved by means of unitary transformations (e.g., via encoding quantum gates) of a pure state (initial state) so as to map the input data onto a corresponding (pure) quantum state uniquely associated with the respective input data, wherein the initial state (prior to applying the transformations) is always the same independent of the input data. Examples of such conventional encoding schemes include angle encoding, basis encoding and amplitude encoding, see, for example, M. Schuld and F. Petruccione, Supervised learning with quantum computers, Springer (2018*)* and M. A. Khan et al., Beyond Bits: A Review of Quantum Embedding Techniques for Efficient Information Processing, IEEE Access Vol. 12, 2024, 46118-46137*.*

### SUMMARY OF THE INVENTION

Efficient encoding of the input data may facilitate the training procedure and may be a relevant factor for the overall performance of a quantum neural network, cf. J. Bowles et al., arXiv:2403.07059 (2024*),* M. Kordzanganeh et al., arXiv:2212.00736 (2022*)* and M. Schuld et al., Physical Review A, 103(3)1032430 (2021*).* Existing encoding schemes, however, may face scaling issues and may be unsuitable for higher-dimensional input data (i.e., data having a large number of features). For angle encoding, the most common form of encoding, the number of qubits should for example be on the same order as the number of features of the input whereas other encoding schemes such as amplitude encoding may require exponentially deep quantum circuits (i.e., number of gates).

It is therefore an object of the present invention to provide means for efficiently encoding input data for processing by a quantum circuit with improved scaling properties in particular for higher-dimensional input data.

This object is met by a method of encoding a data point for processing by a quantum circuit, a processing system for encoding a data point for processing by a quantum circuit, a hybrid quantum-classical computing system and a computer program as set out in the independent claims. Examples thereof are detailed in the dependent claims.

Any feature or combination(s) of features described herein with regard to the method according to the present invention may also be present for the processing system, the quantum-classical computing system and/or the computer program according to the present invention and vice-versa. For the sake of brevity and to avoid unnecessary repetition, certain feature(s) or combination(s) of features may therefore only be described once with regard to either (or some of) the method, the processing system, the quantum-classical computing system and/or the computer program, but may likewise apply to any other one(s) of the method, the processing system, the quantum-classical computing system and/or the computer program. The method according to the invention may in particular be executed using one or more of the processing system, the hybrid quantum-classical computing system and/or the computer program according to the invention.

According to a first aspect, the present invention provides a method of encoding a data point for processing by a quantum circuit, in particular a variational quantum circuit. The method comprises mapping the data point onto a weight distribution assigning a respective weight to each of a set of initial states for the quantum circuit. For some or all of the initial states, the quantum circuit is run repeatedly using the respective initial state as an input to the quantum circuit to determine a measurement outcome of an observable for the respective initial state based on an output of the quantum circuit. A processing result for the data point is determined based on the determined measurement outcomes and the weight distribution.

The method may be computer-implemented at least in part (i.e., in part or in its entirety), e.g., using any type of (classical) computing system. The method may in particular be implemented using (e.g., executed by) the processing system according to the invention and/or the hybrid quantum-classical computing system according to the invention.

The quantum circuit may be configured to receive a quantum state (e.g., a quantum state of one or more qubits) as an input and provide a quantum state (e.g., a quantum state of said one or more qubits) as an output. The quantum circuit may be configured to manipulate the input quantum state (e.g., perform one or more quantum computing operations thereon), wherein the quantum circuit may, e.g., provide the manipulated quantum state as an output. The quantum circuit may comprise one or more quantum gates acting on said quantum state, e.g., on said one or more qubits, for example as detailed below.

The quantum circuit may in particular be a variational quantum circuit, i.e., a quantum circuit having one or more variable (e.g., trainable) parameters, denoted as θ herein. The output of the variational quantum circuit may depend on the input and the one or more variable parameters. Each of the parameters θ may for example be associated with (e.g., affect operation of) one or more quantum gates of the quantum circuit.

The quantum circuit may be implemented in quantum computing hardware, e.g., in the quantum computing hardware of the hybrid quantum-classical computing system according to the invention. The quantum computing hardware for implementing the quantum circuit is not particularly limited and may be any type of quantum computing hardware as known in the art. The quantum computing hardware may in particular be or comprise superconductor-based quantum computing hardware, trapped ion-based quantum computing hardware, neutral atom-based quantum computing hardware, photon-based quantum computing hardware or any combination thereof.

The data point, denoted as x herein, may comprise one or more features (e.g., components) xₖ. Each of the one or more features may contain classical information such as a real number. The data point may be part of a data set comprising a plurality of data points, e.g., a training data set or a validation data set. The data point is processed by the quantum circuit, for example for classification of the data point.

The data point is mapped onto the weight distribution, which is denoted as **p** herein. The weight distribution assigns a respective weight p; to each initial state from the set of initial states |*ψᵢ*〉 for the quantum circuit, **p** = (p₁, p₂, ..., pᵢ, ...). The weights p; depend on the data point, e.g., the features thereof, for example such that each data point is uniquely associated with a corresponding weight distribution (i.e., the mapping may be injective or bijective). The weight distribution may be a probability mass function, i.e., may be a normalized probability distribution assigning a respective probability to each of the set of initial states |*ψᵢ*〉. At least two of the weights, in some examples at least three of the weights, in some examples at least four of the weights in the weight distribution may be non-zero for the data point and/or for one or more points in a feature space spanned by the features of the data point (e.g., for one or more other data points in a data set comprising the data point). In other words, the data point (and/or said one or more points in the feature space) may be mapped onto at least two, at least three and at least four different initial states, respectively. In some examples at least 10%, in some examples at least 20%, in one example at least 50% and in one example all of the weights in the weight distribution may be non-zero for the data point and/or for one or more points in the feature space (e.g., one or more data points in a data set comprising the data point). Mapping of the data point onto the weight distribution may be performed by classical (i.e., non-quantum) means, e.g., by a classical computing system such as the processing system according to the invention.

The set of initial states |*ψᵢ*〉 may be predetermined, i.e., may comprise the same initial states irrespective of the data point that is being encoded. The initial states may in principle be generic quantum states of the quantum circuit (e.g., of the qubits thereof) but preferably are chosen such that the initial states are easy to prepare, e.g., as detailed below. Some or all of the initial states may be orthogonal to each other. The set of initial states may for example comprise at least two initial states, in some examples at least three initial states, in some examples at least four initial states, in some examples at least eight initial states, in one example at least 64 initial states and in one example at least 512 initial states. The number of initial states may for example be chosen based on a number of features of the data point and/or a number of qubits of the quantum circuit.

For some or all of initial states (e.g., for all initial states with a non-zero weight p; or a weight above a weight threshold), the quantum circuit is run repeatedly with the respective initial state being input to the quantum circuit. In other word, different initial states are used (in different runs) as input to the quantum circuit for a same data point (with the quantum circuit being otherwise unchanged). This encoding scheme proposed by the present invention may also be referred to as shot-based quantum encoding (or embedding), shot-based encoding or (quantum) probability-based encoding. For each run, a measurement outcome (denoted as Wᵢ) of an observable is determined based on an output of the quantum circuit, e.g., by performing a measurement of the observable on the output quantum state of the quantum circuit (e.g., the state of the qubits after running the quantum circuit thereon). The observable is not particularly limited and may be any suitable observable, for example a projection onto one or more basis states of the quantum circuit and/or onto one or more of the initial states. In some examples, measurement outcomes for a plurality of observables may be determined, e.g., for a complete set of basis states of the quantum circuit.

Based on the determined measurement outcomes and the weight distribution, a processing result (denoted as f herein, wherein f may comprise one or a plurality of components fⱼ) is determined for the data point, e.g., by averaging and/or weighting of the determined measurement outcomes. A contribution of each initial state (i.e., the measurement outcomes determined for the respective initial state) to the processing result may correspond to (e.g., be proportional to) the weight assigned to the respective initial state. The determination of the processing result may be performed by classical means, e.g., by a classical computing system such as the processing system according to the invention.

The repeated running of the quantum circuit and the determination of the processing result may be performed in a variety of ways and may in particular be performed simultaneously at least in part. For example, the method may comprise determining a respective number of runs, denoted as Nᵢ, for each of the initial states |*ψᵢ*〉 based on the weight distribution p (i.e., depending on the weight distribution, the number of runs may be different for the different initial states). The quantum circuit may be run the respective number of runs (i.e., Nᵢ times) for each of the initial states. The processing result may be determined by averaging the determined measurement outcomes from each of the runs of the quantum circuit (i.e., the processing result may be determined based on the weight distribution in the sense that the number of measurement outcomes being averaged is based on the weight distribution). Optionally, the determined measurement outcomes may additionally or alternatively be weighted based on the weight distribution, e.g., such that a contribution of each initial state to the processing result corresponds to the weight assigned to the respective initial state.

The number of runs for a given initial states may correspond to (e.g., be equal or substantially equal to) the weight assigned to the respective initial state in the weight distribution multiplied by a total number of runs (denoted as N) for all initial states, i.e., N; = pᵢ N (with the number of runs, e.g., being rounded to the nearest integer and/or so as to maintain the total number of runs N). In other examples, the number of runs for a given initial state may depend on the weight assigned to the respective initial state in different ways, e.g., non-linearly and/or with a lower bound and/or an upper bound for the number of runs per initial state (e.g., in combination with a corresponding weighting of the determined measurement outcomes based on the weight distribution). In yet other examples, the number of runs may be the same for some or all of the initial states (e.g., for determining an expectation value of the observable for each initial state as detailed below).

In some examples, the method may comprise determining an expectation value of the observable(s) (denoted as <Wᵢ> whereas Wᵢ denotes the measurement outcome for an individual run) for each of said some or all of the initial states based on the determined measurement outcomes, e.g., by averaging the determined measurement outcomes for the respective initial state. The processing result may be determined based on the determined expectation values and the weight distribution, for example by weighting the determined expectation value of each initial state with the respective weight assigned thereto.

The data point may comprise a feature set of one or more features (e.g., components), **x** = (x₁, x₂, ..., xₖ, ...). The data point may for example comprise at least two features, in some examples at least three features, in some examples at least four features, in some examples at least eight features, in one example at least 64 features and in one example at least 512 features. The mapping for mapping the data point onto the weight distribution may associate each feature set with a corresponding weight distribution, **x** → **p(x).** Preferably, the mapping uniquely associates each feature set with a corresponding weight distribution, i.e., the mapping may be injected or bijective (such that each distinct feature set is mapped onto a different weight distribution). In some examples, the number of initial states in the set of initial states may be equal to or larger than the number of features of the data point.

Preferably, the initial states are easy to prepare. Preparation of the initial states as the input to the quantum circuit may for example only involve a small number of (e.g., unitary) state transformations and/or quantum gates (e.g., acting on a (same) initialization state of the quantum circuit in which the quantum circuit is initialized at the beginning of each run) for each of the initial states, e.g., no more than five state transformations (e.g., single-qubit and/or multi-qubit transformations), in some examples no more than three state transformations, in one example no more than two state transformations and in one example no more than one state transformation and/or no more than five quantum gates (e.g., single-qubit and/or multi-qubit gates), in some examples no more than three quantum gates, in one example no more than two quantum gates and in one example no more than one quantum gate. In some examples, preparation of the initial states as the input to the quantum circuit does not involve the application of any state transformations and/or does not involve the application of any quantum gates.

Additionally or alternatively, preparation of the initial states as the input to the quantum circuit may only involve single-qubit state transformations and/or single-qubit quantum gates (i.e., no multi-qubit state transformations and/or quantum gates acting on more than one qubit simultaneously).

In some examples, the set of initial states may be or comprise a set of basis states (e.g., a partial or complete set of basis states) of the quantum circuit (e.g., at the input thereof), in particular a (partial or complete) set of basis states of a plurality of qubits (e.g., some or all of the qubits) of the quantum circuit. Additionally or alternatively, the set of initial states may be or comprise one or more superposition states of basis states of the quantum circuit (e.g., of some or all of the qubits thereof).

The method may further comprise applying a non-linear scaling function σ (which may, e.g., be or comprise a non-linear activation function) on the determined processing result, i.e., **f** → σ(**f**). The non-linear scaling function is not particularly limited and may for example be (or comprise) any non-linear activation function used for classical neural networks, e.g., the rectifier (ReLU) activation function and/or the softmax (normalized exponential) function.

The non-linear scaling function may map the determined processing result onto a probability mass function. The probability mass function may for example be used as a weight distribution for a subsequent layer of a multi-layer quantum circuit (i.e., may assign a respective weight to each of a set of initial state for the subsequent layer), e.g., as detailed below.

The quantum circuit may comprise a plurality of quantum gates acting on a plurality of qubits. The implementation of the qubits is not particularly limited and said qubits may be implemented using any type of (hardware) qubit implementations known in the art (and the quantum gates using any type of suitable (hardware) quantum gate implementations). The qubits may in particular be implemented using one or more of superconducting qubits, trapped ion qubits, neutral atom qubits and/or photonic qubits (i.e., any combination of the aforementioned types of qubit implementations.

The number of qubits in the quantum circuit is not particularly limited and the quantum circuit may in principle comprise any number of qubits. The quantum circuit may for example comprise at least two qubits, in some examples at least three qubits, in some examples at least four qubits, in some examples at least six qubits, in some examples at least eight qubits, in one example at least 16 qubits, in one example at least 32 qubits and in one example at least 64 qubits. As the shot-based quantum encoding is specifically adapted to quantum circuits (see below), the method according to the invention may be implemented with a small number of qubits (e.g., smaller than the number of qubits used or required with conventional encoding schemes). The number of qubits in the quantum circuit may for example be no more than 32 qubits, in some examples no more than 16 qubits, in some examples no more than eight qubits, in some examples no more than six qubits, in one example no more than 4 qubits and in one example no more than two qubits (although any larger number of qubits may be used as needed for the particular application).

The same applies, additionally or alternatively, to the number of quantum gates in the quantum circuit, i.e., the number of quantum gates in the quantum circuit is not particularly limited and the quantum circuit may in principle comprise any number of quantum gates, in particular (and independent of the specific number of qubits) within any of the aforementioned ranges (or combinations thereof) stated above for the number of qubits.

The quantum circuit may form a layer (e.g., a first or input layer) of a multi-layer quantum circuit. The multi-layer quantum circuit may comprise one or more additional quantum layers/quantum circuits. The multi-layer quantum circuit may, optionally, comprise one or more classical layers (or stages) arranged between the quantum layers (e.g., for applying the non-linear function and/or for encoding), i.e., may be a hybrid quantum-classical circuit (with at least one additional quantum layer). The multi-layer quantum circuit may for example comprise one or more classical layers between each pair of adjacent quantum layers.

The method may further comprise deriving an input for a subsequent (e.g., a second or later) layer of the multi-layer quantum circuit from the determined processing result. This may for example comprise applying the non-linear scaling function to the determined processing result and/or encoding the determined (and, optionally, scaled) processing result for input to subsequent layer.

Preferably, the encoding of the determined processing result is performed by the shot-based quantum encoding as proposed by the present invention, e.g., as described above for the (first) quantum circuit/layer (comprising some or all features(s) or combination of feature(s) as described above). Accordingly, deriving the input for the subsequent layer of the multi-layer quantum circuit from the determined processing result may comprise mapping the determined processing result (e.g., by appropriate non-linear scaling) onto a subsequent-layer weight distribution assigning a respective weight to each of a set of subsequent-layer initial states for the subsequent layer of the multi-layer quantum circuit. The method may further comprise, for some or all of the subsequent-layer initial states, repeatedly running the subsequent layer of the multi-layer quantum circuit (e.g., a respective number of runs/times determined based on the subsequent-layer weight distribution) using the respective subsequent-layer initial state as an input to the subsequent layer of the multi-layer quantum circuit to determine a subsequent-layer measurement outcome of a (second) observable (or a plurality of second observables) for the respective subsequent-layer initial state based on an output of the subsequent layer of the multi-layer quantum circuit. The method may further comprise determining a subsequent-layer processing result for the data point based on the determined subsequent-layer measurement outcomes and the subsequent-layer weight distribution.

According to a second aspect, the present invention provides a processing system for encoding a data point for processing by a quantum circuit. The processing system is configured to control quantum computing hardware for implementing said quantum circuit. The processing system is further configured to execute a method of encoding a data point for processing by a quantum circuit according to any one of the embodiments described herein using said quantum computing hardware.

The processing system may be implemented in hardware, software or a combination thereof. The processing system may comprise one or more processing units, each of which may for example be or comprise a central processing unit (CPU), a graphics processing unit (GPU), an application-specific integrated circuit (ASIC), a field-programmable gate array (FPGA), a programmable logic array (PLA), a microcontroller or another processing device. The processing system may comprise memory such as a non-volatile memory (e.g., a hard disk drive and/or a flash memory) and/or a volatile memory (e.g., a random-access memory). Some or all of the memory may be integrated into one or more of the processing unit(s). The memory may store instructions for execution by the one or more processing units to provide the functionality described herein. In particular, the instructions, when executed by the one or more processing units, may cause the one or more processing units to execute some or all of the steps of the method according to the invention. In some examples, the memory may store a computer program according to the invention in accordance with any one of the embodiments described herein. The processing system may be a classical processing system, i.e., may not comprise any quantum computing hardware but only classical computing hardware.

The processing system may comprise one or more interfaces for coupling the processing system to the quantum computing hardware. For controlling the quantum computing hardware, the processing system may be configured to send control signals to the quantum computing hardware (e.g., via said one or more interfaces), e.g., electrical signals, optical signals and/or wireless signals. The processing system may further be configured to receive signals such as sensor signals from the quantum computing hardware (e.g., via said one or more interface), for example to perform measurements.

The processing system is configured to execute a method of encoding a data point for processing by a quantum circuit, in particular a variational quantum circuit, according to any one of the embodiments described herein. In particular, the processing system is configured to: map the data point onto a weight distribution assigning a respective weight to each of a set of initial states for the quantum circuit; for some or all of the initial states, repeatedly run the quantum circuit using the respective initial state as an input to the quantum circuit to determine a measurement outcome of an observable for the respective initial state based on an output of the quantum circuit; and determine a processing result for the data point based on the determined measurement outcomes and the weight distribution. Optionally, the processing system may further be configured to execute any (or any combination) of the other steps described herein that the method according to the present invention may comprise.

The processing system is configured to control the quantum computing hardware for executing the method of encoding a data point for processing by a quantum circuit. The processing system may in particular be configured to control the quantum computing hardware to run the quantum circuit, e.g., to prepare an initial state as an input to the quantum circuit, manipulate the initial state in the quantum circuit and measure one or more observables on the output of the quantum circuit to obtain one or more measurement outcomes.

According to a third aspect, the present invention provides a hybrid quantum-classical computing system comprising the processing system of the present invention according to any one of the embodiments described herein and quantum computing hardware configured to implement said quantum circuit.

As mentioned above, the quantum computing hardware for implementing the quantum circuit is not particularly limited and may be any type of quantum computing hardware as known in the art. The quantum computing hardware may in particular be or comprise superconductor-based quantum computing hardware, trapped ion-based quantum computing hardware, neutral atom-based quantum computing hardware, photon-based quantum computing hardware or any combination thereof. The quantum computing hardware may comprise one or more qubits, which may, e.g., be embodied as one or more of superconducting qubits, trapped ion qubits, neutral atom qubits and/or photonic qubits. The quantum computing hardware may further comprise means for manipulating a state of said one or more qubits, e.g., to perform one or more state transformations and/or implement one or more quantum gates acting on said one or more qubits. Said means may for example be configured to manipulate the state of said one or more qubits electrically, magnetically, electromagnetically and/or optically.

According to a fourth aspect, the present invention provides a computer program comprising machine-readable instructions which, when executed by a processing unit, cause the processing unit to execute a method of the present invention according to any one of the embodiments described herein and/or to implement a processing system of the present invention according to any one of the embodiments described herein. The computer program may for example be stored on a non-transitory machine-readable medium and/or in a memory of the processing system according to the invention.

The shot-based quantum encoding scheme proposed by the present invention is specifically adapted to how quantum circuits and quantum computing hardware operate and thereby provides a particularly hardware-efficient way of encoding and processing classical data that avoids the scaling issues associated with conventional encoding schemes. Due to the inherent probabilistic nature of quantum measurements, a (typically large) number of runs is anyway required for any quantum circuit in order to sample the quantum-mechanical output thereof (e.g., to determine, at least approximately, the expectation value of one or more observables for an output state of the quantum circuit). The present invention takes advantage of this fact by additionally using these different runs also for encoding the input data, namely by providing different initial states as an input to the quantum circuit in these runs and determining the processing result for the data point based on the measurement outcomes of the runs and a weight/probability distribution that assigns a respective weight to each of the initial states based on the input data. In this way, a limited number of initial states, which preferably are easy to prepare in the quantum computing hardware (e.g., using only a limited number of quantum gates/state transformations), may be used to encode even large high-dimensional data sets. This may allow for reduced complexity of the quantum circuit, e.g., reduced depth (number of gates) and/or width (number of qubits), as compared to conventional encoding schemes. Whereas the latter map classical variables to a corresponding coherent quantum state (e.g., a set of quantum amplitudes uniquely associated with the classical variables, which may require an exponentially large number of gates to prepare), the encoding scheme proposed herein applies classical control and maps classical variables to a classical mixture of distinct initial states associated with a different number of shot allocations. Moreover, the proposed encoding scheme may facilitate processing of linearly separable data sets, which typically are difficult to handle for quantum circuits. The proposed encoding scheme also enables the construction of quantum models that resemble classical neural networks and thus, for example, may be trained using optimization methods for classical neural networks such as gradient-based optimization methods.

### LIST OF FIGURES

In the following, a detailed description of the invention and exemplary embodiments thereof is given with reference to the figures. The figures show schematic illustrations of
Fig. 1: a hybrid quantum-classical computing system with a processing system for encoding a data point for processing by a quantum circuit according to an example;
Fig. 2: a flow diagram of a method of encoding a data point for processing by a quantum circuit according to an example;
Fig. 3: a flow diagram of a method of encoding a data point for processing by a quantum circuit according to another example;
Fig. 4: a multi-layer quantum circuit according to an example;
Fig. 5: a flow diagram of a method of encoding a data point for processing by a quantum circuit according to another example; and
Fig. 6a, 6b: exemplary implementations of the present invention and its application to exemplary classification tasks.

### DESCRIPTION OF THE EXEMPLARY EMBODIMENTS

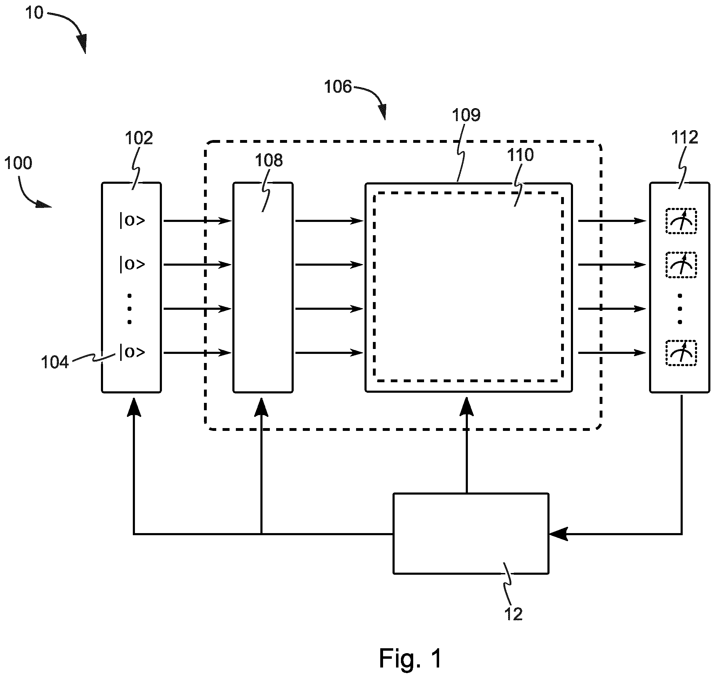

Fig. 1 depicts a schematic illustration of a hybrid quantum-classical computing system 10 in accordance with an example. The system 10 comprises a classical processing system 12 and quantum computing hardware 100.

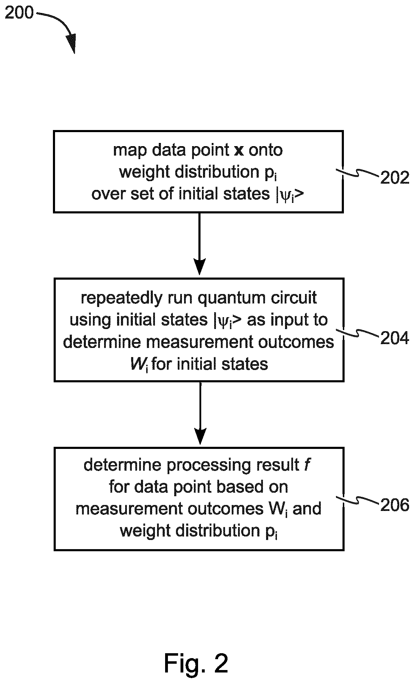

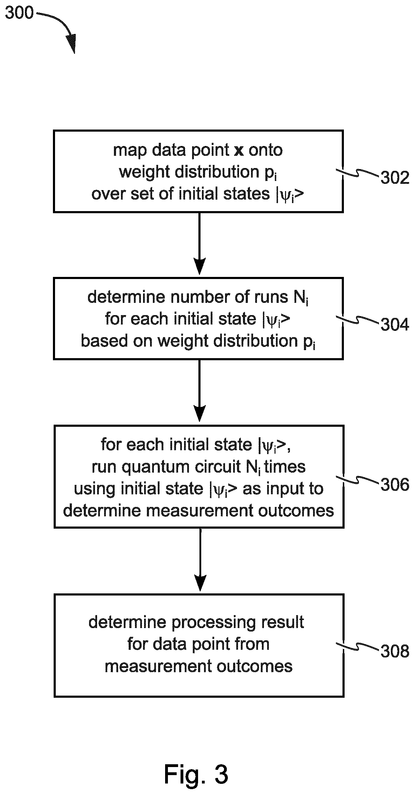

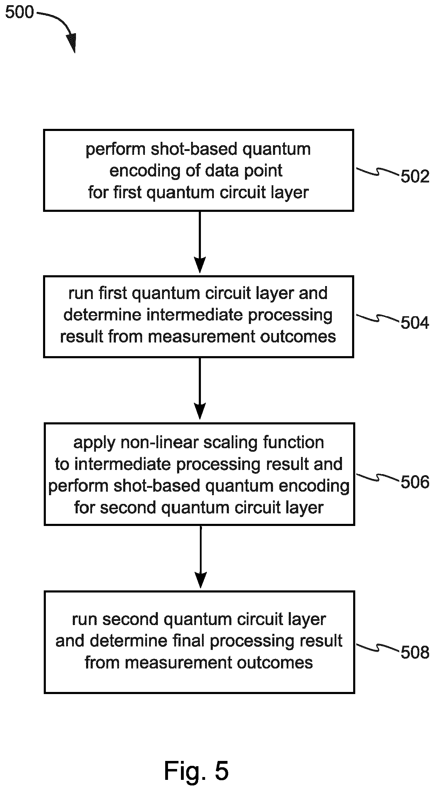

The classical processing system 12 is communicatively coupled to the quantum computing hardware 100 and is configured to control the quantum computing hardware 100, e.g., by means of corresponding control signals. The processing system 12 is configured to execute, using the quantum computing hardware 100, a method of encoding a data point for processing by a quantum circuit according to any one of the embodiments described herein, for example the method 200 of Fig.2, the method 300 of Fig. 3 and/or the method 500 of Fig. 5.

The processing system 12 comprises a processing unit (not shown), which may for example be embodied as a central processing unit (CPU), a graphics processing unit (GPU), an application-specific integrated circuit (ASIC), a field-programmable gate array (FPGA), a programmable logic array (PLA), a microcontroller or another processing device. The processing system 12 further comprises memory (not shown) storing machine-readable instructions (e.g., a computer program according to the present invention) for execution by the processing unit to provide the functionality described herein and in particular to cause the processing unit to execute a method of encoding a data point for processing by a quantum circuit according to any one of the embodiments described herein.

The quantum computing hardware 100 comprises a qubit register 102 comprising a plurality of qubits 104, for example between 2 and 1024 qubits, in some examples between 3 and 64 qubits, in one example between 4 and 16 qubits and in one example between 4 and 8 qubits. The qubits 104 are for example embodied as superconducting qubits, trapped ion qubits, neutral atom qubits, photonic qubits or any combination thereof.

The quantum computing hardware 100 further comprises qubit manipulation means 106 (e.g., qubit manipulation hardware) configured to manipulate a state of the qubits 104, e.g., to perform state transformations on the qubits 104 (for example by application of quantum gates). The qubit manipulation means 106 are for example configured to manipulate the state of the qubits 104 electrically (e.g., by application of a voltage, a current and/or an electrical field to the qubits 104), magnetically (e.g., by application of a magnetic field to the qubits 104), electromagnetically (e.g., by application of micro-wave and/or radio-frequency electromagnetic fields or radiation) and/or optically (e.g., by application of light such as a laser beam).

The qubit manipulation means 106 comprise (e.g., are configured to implement) a state preparation module 108 for preparing the qubits 104 in a predetermined quantum state (initial state). The state preparation module 108 is for example configured to initialize the qubits 104 in a (same) initialization state (e.g., |0〉) and to then transfer the qubits 104 to a (variable) initial state |*ψᵢ*〉.

The qubit manipulation means 106 further comprise a quantum circuit module 109 configured to implement a quantum circuit 110. The quantum circuit 110 is configured to receive the initial state |*ψᵢ*〉 (of the qubits 104) from the state preparation module 108 as an input, manipulate the initial state |*ψᵢ*〉 (e.g., perform one or more state transformations thereon) and to provide the manipulated state as an output. The quantum circuit 110 is for example configured to perform (quantum) computations on the initial state |*ψᵢ*〉 by applying one or more quantum gates (e.g., single-qubit and/or multi-qubit quantum gates) thereto and output the resulting state as a computation result. The evolution of the initial state |*ψᵢ*〉 in the quantum circuit 110 may be expressed by a unitary operation *U*, i.e., |*ψᵢ*〉 → *U*|*ψᵢ*〉, wherein the unitary operator may or may not depend on the initial state and/or the data to be processed. The quantum circuit 110 may in particular be a variational quantum circuit having a plurality of adjustable parameters θ governing the evolution of the initial state |*ψᵢ*〉 in the quantum circuit 110, i.e., |*ψᵢ*〉 → *U*(*θ*)|*ψᵢ*〉.

The quantum computing hardware 100 further comprises a measurement module 112 that is configured to perform measurements on the output of the quantum circuit 110 to determine a measurement outcome, for example to measure one or more observables on the quantum state that is output by the quantum circuit 110 (e.g., to measure a state of some or all of the qubits 104 after running the quantum circuit 110, i.e., perform a projective measurement of the state of some or all of the qubits 104).

The processing system 12 is configured to control some or all of the qubit register 12, the qubit manipulation means 106, the state preparation module 108, the quantum circuit 110 and the measurement module 112. For example, the processing system 12 can define operations of the qubit manipulation means 106 to implement the state preparation module 108 (e.g., to initialize the qubits 104 in the qubit register 102 and prepare the qubits 104 in the initial state) and/or the quantum circuit module 110 (e.g., to perform computations on the qubits 104 prepared in the initial state) and can retrieve a measurement outcome from the measurement module 112, e.g. by determining and sending corresponding control signals to the quantum computing hardware 100.

Fig. 2 depicts a flow diagram of a method 200 of encoding a data point for processing by a quantum circuit in accordance with an example. The method 200 may for example be executed using the hybrid quantum-classical computing system 10 (e.g., executed by the processing system 12 thereof), which is used as a non-limiting example for illustration purposes in the following. The method 200 is not limited to the order of execution implied by the flow diagram in Fig. 2. As far as technically feasible, the method 200 may be executed in an arbitrary order and steps thereof may also be executed simultaneously at least in part.

The method 200 encodes and processes a classical data point **x** in a quantum circuit such as the quantum circuit 110 implemented by the quantum circuit module 109 of the computing system 10. The data point may comprise a plurality of features (components) and may for example be represented by an n-dimensional vector **x** = (x₁, ..., xₙ). As a non-limiting example for illustration purposes, the data point may for example be a four-dimensional vector with four components, **x** = (x₁, x₂, x₃, x₄), e.g., **x** = (1, 5, 4, 2).

The method 200 comprises, in step 202, mapping the data point **x** onto a weight distribution **p** = (p₁, p₂, ..., pᵢ, ...) assigning a respective weight p; to each of a set of initial states |*ψᵢ*〉 for the quantum circuit 110. In one example, the set of initial states comprises one initial state for each feature/component of the data point, e.g., four initial states in the aforementioned example of a four-dimensional data point. The initial states |*ψᵢ*〉 may for example be the basis states of the qubits 104, which may facilitate preparation of the initial states (e.g., requiring at most a single (single-qubit) state transformation or quantum gate for each of the qubits). In the aforementioned example, two qubits may, e.g., be used for encoding the data point and the set of initial states may comprises the four basis states of the two qubits, |*ψᵢ*〉 = |00〉, |*ψ*₂〉 = |01〉, |*ψ*₃〉 = |10〉 and |*ψ*₄〉 = |11〉. The weights p; assigned to the initial states are determined based on the features of the data point. In one example, each feature is mapped onto a respective initial state and the weight assigned to that initial state may, e.g., be proportional to a value of the feature. In the case of x = (1, 5, 4, 2), the weight distribution may for example be **p** = (1, 5, 4, 2) or, as a normalized probability mass function, **p** = (0.083, 0.417, 0.333, 0.167).

The method 200 further comprises, in step 204, repeatedly running the quantum circuit 110 for a total number of runs N, wherein different ones of the initial states |*ψᵢ*〉 are provided as an input to the quantum circuit 110 over the course of the N runs. In each run, a measurement outcome Wᵢ of an observable O (or measurement outcomes Wⱼᵢ for a plurality of observables Oⱼ) is determined for the respective initial state |*ψᵢ*〉 based on an output of the quantum circuit, e.g., by performing a corresponding measurement on the output state with the measurement module 112 (for example projecting some or all of the qubits 104 onto their respective basis states).

The quantum circuit 110 may be run multiple times for each of the initial states, for example a same number of runs (e.g., N/4 in the aforementioned example) for each initial state. From the measurement outcomes Wᵢ of these runs, an expectation value <Wᵢ> of the observable may be determined for each of the initial states. The number of runs for each initial state may for example be chosen so as to allow for a reliable sampling of the expectation value <Wᵢ>.

The method 200 further comprises, in step 206, determining a processing result f for the data point **x** based on the determined measurement outcomes W; and the weight distribution **p.** The processing result may for example be determined based on the determined expectation values and the weight distribution. This may for example comprise weighting the expectation value <W;> for each initial state determined in step 204 by the corresponding weight p; to obtain a weighted expectation value as the processing result, *f* = Σ*ᵢ*p*ᵢ* <Wᵢ>.

Fig. 3 depicts a flow diagram of a method 300 of encoding a data point for processing by a quantum circuit in accordance with another example. The method 300 may for example be executed using the hybrid quantum-classical computing system 10 (e.g., executed by the processing system 12 thereof), which is again used as a non-limiting example for illustration purposes in the following. The method 300 is not limited to the order of execution implied by the flow diagram in Fig. 3. As far as technically feasible, the method 300 may be executed in an arbitrary order and steps thereof may also be executed simultaneously at least in part.

The method 300 is similar to the method 200 of Fig. 2 described above, expect that in this case the number of runs for each initial state is determined based on the weight distribution that the data point is mapped onto (rather than using the same number of runs for each initial state as in the example of method 200).

For this, the data point **x** is mapped onto the weight distribution **p** in step 302, e.g., as described above for step 202 of method 200. In step 304, the number of runs Nᵢ for each of the initial states |*ψᵢ*〉 is determined based on this weight distribution. The number of runs Nᵢ for a given initial state |*ψᵢ*〉 may for example be the product of the weight p; assigned to the initial state and the total number of runs N, i.e., Nᵢ = pᵢ · N (with appropriate rounding to an (e.g., closest) integer and/or so as to maintain the total number of runs N). In other words, the data point is mapped onto a weight distribution which is then mapped onto a number of runs for the initial states, **x** → ***p*(*x*)** → ***N*(*p*(*x*))*.*** In the aforementioned example of **x** = (1, 5, 4, 2) and with, e.g., N = 1000, the number of runs may for example be N₁ = 83 with |00〉 as the initial state, N₂ = 417 with |01〉 as the initial state, N₃ = 333 with |10〉 as the initial state and N₃ = 167 with |11〉 as the initial state.

In step 306, the quantum circuit 110 is then run the respective number of runs Nᵢ for each of the initial states and the measurement outcomes Wᵢ of the observable are determined for the respective initial state based on the output of the quantum circuit. The processing result f is then determined in step 308, for example by averaging all of the measurement outcomes obtained in step 306 (with equal weight). As the number of runs for each initial state is based on (e.g., proportional to) the weight assigned to the respective initial state, the contribution of that initial state to the processing result will also be based on (e.g., be proportional to) the corresponding weight.

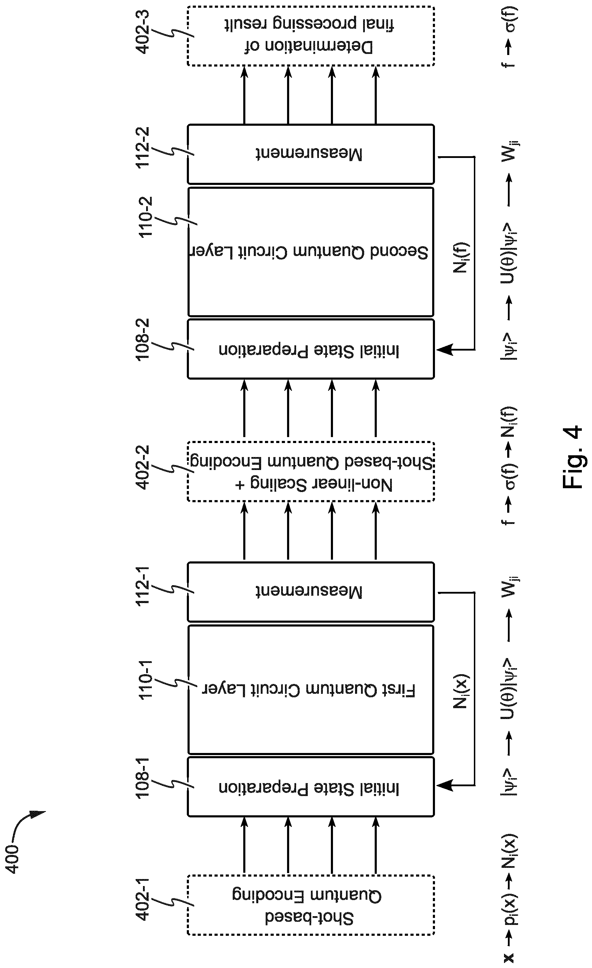

Fig. 4 depicts a schematic illustration of a multi-layer quantum circuit 400. The multi-layer quantum circuit 400 may for example be implemented using the computing system 10 of Fig. 1, i.e., using the processing system 12 and the quantum computing hardware 100 with the qubit register 102, the qubit manipulation means 106 and the measurement module 112. The multi-layer quantum circuit 400 may be used for executing a method of encoding a data point according to any one of the embodiments described herein, for example method 500 of Fig. 5 described below for encoding and processing a data point.

The multi-layer quantum circuit 400 comprises a plurality of quantum circuit layers (e.g., two quantum circuit layers 110-1, 110-2 in the example of Fig. 4 or more than two quantum circuit layers in other examples). Each of the quantum circuit layers (which may also be referred to as a quantum layer or quantum (circuit) stage) forms a quantum circuit similar to the quantum circuit 110 described above and may for example be implemented using the quantum circuit module 109 of the qubit manipulation means 106. The evolution of a quantum state (e.g. of the qubits 104 in the qubit register 102) when being propagated through a quantum circuit layer 110-1, 110-2 (i.e., when running the respective quantum circuit on the qubits 104) may be described by a (unitary) operator U (which generally will be different for each of the quantum circuit layer 110-1, 110-2) acting on the respective initial state |*ψᵢ*〉 provided as an input to the respective quantum circuit layer 110-1, 110-2, |*ψᵢ*〉 → *U*|*ψᵢ*〉. Some or all of the quantum circuit layers 110-1, 110-2 may be variational quantum circuits, for which the evolution depends on a (respective) set of adjustable (and thereby trainable) parameter *θ* such that *U = U(θ).*

The multi-layer quantum circuit 400 may further comprise a respective initial state preparation stage 108-1, 108-2 prior to each of the quantum circuit layers 110-1, 110-2 and a respective measurement stage 112-1, 112-2 after each of the quantum circuit layers 110-1, 110-2. The initial state preparation stages 108-1, 108-2 serve to prepare the initial state |*ψᵢ*〉 (e.g., of the qubits 104 in the qubit register 102) as an input for the respective quantum circuit layer 110-1, 110-2 and may for example be implemented using the state preparation module 108 of the qubit manipulation means 106. The initial states for the first quantum circuit layer 110-1 may or may not be the same as the initial states for the second quantum circuit layer 110-2. The measurement stages 112-1, 112-2 serve to probe the output of the respective quantum circuit layer 110-1, 110-2 (e.g., measure an observable on the quantum state *U*|*ψᵢ*〉 of the qubits 104 in the qubit register 102 after running the respective quantum circuit layer 110-1, 110-2 thereon to yield a measurement outcome Wᵢ) and may for example be implemented using the measurement module 112.

The multi-layer quantum circuit 400 may further comprise (or be combined with) various classical processing stages, i.e., may be a hybrid multi-layer quantum-classical circuit. The classical processing stages may, e.g., be implemented using (e.g., only) the processing system 12 (which additionally may control the quantum computing hardware 100 for implementing the quantum circuit layers 110-1, 110-2 of the multi-layer quantum circuit 400). In Fig. 4, classical processing stages (not involving the qubits 104) are illustrated by dashed lines, whereas quantum processing stages (involving the qubits 104) are illustrated by solid lines.

The multi-layer quantum circuit 400 may in particular further comprise a first shot-based quantum encoding stage 402-1, which may for example be configured to execute step 502 of method 500 described below to encode a data point **x** - via a weight distribution **p** with weights p;(x) - into numbers of runs (or shots) N;(x) for each of the initial states |*ψᵢ*〉 for the first quantum circuit layer 110-1. The multi-layer quantum circuit 400 may further comprise a non-linear scaling and second shot-based quantum encoding stage 402-2, which may for example be configured to execute step 506 of method 500 described below to encode an (intermediate) processing result f (determined from the measurement outcomes W; of the first quantum circuit layer 110-1) - via application of a non-linear scaling function σ - into a numbers of runs (or shots) N;(x) for each of the initial states |*ψᵢ*〉 for the second quantum circuit layer 110-2. The multi-layer quantum circuit 400 may also comprise a (final) processing result determination stage 402-3 for determining a (final) processing result f for the data point from the measurement outcomes Wᵢ of the second quantum circuit layer 110-2 and, optionally, apply another non-linear scaling function σ (which may or may not be the same scaling function as used in stage 402-2) thereto, e.g., as described for step 508 of method 500 below.

Fig. 5 depicts a flow diagram of a method 500 of encoding a data point x for processing by a multi-layer quantum circuit in accordance with another example. The method 500 may for example be executed using the hybrid quantum-classical computing system 10 (e.g., executed by the processing system 12 thereof), which is again used as a non-limiting example for illustration purposes in the following. The multi-layer quantum circuit may be the multi-layer quantum circuit 400 of Fig. 4, which is also used as a non-limiting example for illustration purposes in the following and may, e.g., be implemented using the computing system 10 as detailed above with reference to Fig. 4.

The method 500 is similar to the method 200 of Fig. 2 and the method 300 described above, applying a shot-based quantum encoding as in methods 200 and 300 to a multi-layer quantum circuit such as the multi-layer quantum circuit 400. Such multi-layer quantum circuits may for example be used for quantum machine learning. Method 500 thus provides a hardware-efficient encoding scheme for, e.g., quantum machine learning applications that, as outlined below, moreover allows for designing quantum neural networks that closely resemble classical neural networks and thus may be trained in similar ways, for example using gradient-based optimization methods.

Method 500 comprises, in step 502 (which may, e.g., be implemented by stage 402-1 of the multi-layer quantum circuit 400 using the processing system 12), mapping the data point **x** onto a weight distribution **p** that assigns a respective weight p; to each of a set of initial states |*ψᵢ*〉 of the first quantum circuit layer 110-1, e.g., as in step 202 of method 200. This may in particular comprise mapping the data point **x** onto a distribution that assigns a respective number of runs N; to each of the initial states, e.g., as in steps 302 and 304 of method 300. For example, the data point **x** may be mapped onto a normalized probability mass function **p** and this probability mass function may be multiplied by a total number of runs N, which - depending on the features of the data point **x,** the number of qubits 104 and/or the complexity of the first quantum circuit layer 110-1 (e.g., a number of quantum gates and/or a fidelity of the first quantum circuit layer 110-1) - may for example be between 10 and 10⁶, in some examples between 100 and 10⁵ and in one example between 500 and 10⁴.

In step 504, the first quantum circuit layer 110-1 is then run N; times for each of the initial states |*ψᵢ*〉, e.g., similar to step 204 of method 200 and step 304 of method 300: In each run, the respective initial state is prepared in the qubit register 102, e.g., by stage 108-1 of the multi-layer quantum circuit 400 using the state preparation module 108. The first quantum circuit layer 110-1 is then run (e.g., by the quantum circuit module 109) with the respective initial state an input, yielding the evolved state *U*|*ψᵢ*〉 as an output. One or more observables Oⱼ (with index j numbering the observables) are measured on this output, e.g., by stage 112-1 of the multi-layer quantum circuit 400 using the measurement module 112, yielding a measurement outcome Wⱼᵢ (for observable *O*ⱼ and initial state |*ψᵢ*〉). By averaging the measurement outcomes of all runs for each of the observables, an intermediate (first-layer) processing result **f** = (f₁, ..., fⱼ, ...) is obtained, to which each of the initial states contributes according to the weights pᵢ, which encode the data point **x.**

Quantum-mechanically, the shot-based quantum encoding proposed by the present invention may be thought of as mapping the data point **x** onto a mixed state (as opposed to conventional encoding schemes, which map a data point onto one particular pure state, which will generally be associated with off-diagonal terms in the density matrix). In this mixed state, different initial states are mixed with the weights p; determined by the weight distribution onto which the data point is mapped. Following processing in the first quantum circuit layer 110-1, |*ψ*〉 → *U*|*ψᵢ*〉*,* the output of the first quantum circuit layer 110-1 (taking into account/averaging the different runs) may be represented by the density matrix $ρ \left(x, θ\right) = {\sum }_{i} {p}_{i} \left(x\right) \left(U\left(θ\right)\left|{ψ}_{i}\right〉\left〈{ψ}_{i}\right|{U}^{†}\left(θ\right)\right)$ In the above example, the processing result (average of all measurement outcomes) corresponds to the expectation values of the observables Oⱼ, *f*ⱼ (***x**, θ*) = *tr*[*Oⱼ* · *ρ*(***x**, θ*)], and may thus be expressed as ${f}_{j} \left(x, θ\right) = {\sum }_{i} \left〈{W}_{ji}\left(θ\right)\right〉 {p}_{i} \left(x\right)$ with *〈Wjᵢ*(*θ*)〉 denoting the expectation value of the observable Oⱼ for the initial state |*ψᵢ*〉 (sampled by averaging the individual measurement outcomes Wⱼᵢ for the respective initial state): $\left〈{W}_{ji}\left(θ\right)\right〉 = \left〈{ψ}_{i}\right| {U}^{†} \left(θ\right) {O}_{j} U \left(θ\right) \left|{ψ}_{i}\right〉$

As the determination of quantum mechanical expectation values such as *〈Wⱼᵢ*(*θ*)*〉* in any case requires a plurality of runs of the first quantum circuit layer 110-1 for sampling the full quantum state and approximating the true expectation value, the shot-based quantum encoding proposed by the present invention specifically exploits the probabilistic nature of quantum measurements on the output of a quantum circuits so as to provide an efficient way of encoding the classical information input into the quantum circuit, namely by using different initial states (the distribution of which/density matrix associated therewith encodes the classical information **x**) as input to the otherwise identical/unchanged quantum circuit (rather than always using the same initial state as in conventional encoding schemes).

In step 506, a non-linear scaling function σ is applied to the intermediate processing result **f** of the first quantum circuit layer 110-1, f → σ(**f**), and the scaled intermediate processing result is again mapped - via a weight distribution - to a number of runs Nᵢ(σ(**f**)) for each of a set of initial states |*ψᵢ*〉 for the second quantum circuit layer 110-2 (wherein the set of initial states for the first and second quantum circuit layers 110-1, 110-2 may or may not be the same). Advantageously, this may be achieved by an appropriate choice of the measured observable(s) and/or by an appropriate non-linear function that directly maps the intermediate processing result f onto a (normalized) probability mass function, i.e., the scaled intermediate processing result may already be the weight distribution used for the shot-based quantum encoding, from which the number of runs may, e.g., again be obtained by multiplication with a total number of runs for the second quantum circuit layer (which may or may not be different than the number of runs for the first quantum circuit layer). Step 506 may be implemented by stage 402-2 of the multi-layer quantum circuit 400 using the processing system 12.

For example, a plurality of observables Oⱼ may be measured in step 504, each yielding a component fⱼ of the intermediate processing result **f.** If the initial states form a complete set of basis states (e.g., the global 2ⁿ basis states 10) = |0...00〉, |1〉 = |0...01〉, |2〉 = |0...10〉, ... with n being the number of qubits 104 in the register 102) and the observables correspond to projections onto the same set of basis states (e.g., a projection onto the global 2ⁿ basis states |0〉〈0|, |1〉〈1|, |2〉〈2|, ...), then the component fⱼ of the processing result **f** for the observable Oⱼ = |*j*〉〈*j*| (i.e., the projection onto the j-th basis state) may be expressed as ${f}_{j} \left(x, θ\right) = {\sum }_{i} {\left|{U}_{ji}\left(θ\right)\right|}^{2} {p}_{i} \left(x\right)$ with *Uⱼᵢ*(θ) = 〈*j*|*U*(*θ*)|*i*〉. In this case, the intermediate processing result **f =** (f₁, ..., fⱼ, ...) is thus again a probability mass function (which could already be used as a weight distribution for the shot-based quantum encoding for the second quantum circuit layer 110-2, e.g., in case no non-linear scaling is to be performed).

The intermediate processing result of the first quantum circuit layer 110-1 (which contains classical information) is scaled by applying a non-linear function σ thereto: ${f}_{j} \to σ \left({f}_{j}\right) = σ \left({\sum }_{i} \left〈{W}_{ji}\left(θ\right)\right〉 {p}_{i}\left(x\right)\right)$ The scaled intermediate processing result provides an output that mathematically is remarkably similar to that of a classical neural network (or a layer thereof), in particular a multi-layer perceptron (MLP), wherein an output of the latter may for example be expressed as $σ \left({\sum }_{i} {\hat{W}}_{ji} \left(θ\right) {x}_{i}\right)$ As a result of the shot-based quantum encoding, the multi-layer quantum circuit 400 mimics the form of a classical neural network with the main differences being that the data point **x** is first mapped onto a weight distribution/probability mass function **p(x)** and that Wⱼᵢ are the measurement outcomes of a variational quantum circuit, which indirectly depend on the trainable weights θ (rather than being a classical matrix *Ŵ*ⱼᵢ that directly contains the trainable weights).

Preferably, the scaling function is chosen such that its output σ(**f**) is again a probability mass function **p** with *pⱼ = σ*(*fⱼ*). In this way, the output σ(**f**) can directly be used for shot-based quantum encoding for the second quantum circuit layer 110-2, thus effectively creating a multilayer perceptron that only uses the (quantum) weights θ. The non-linear scaling function σ may for example be a non-linear activation function as, e.g., used for classical neural networks, for example the rectifier (ReLu) activation function and/or the softmax (normalized exponential) function. Preferably, the scaling function is such that low-probability events (e.g., observables that have an expectation value below a predefined threshold) are set to zero. In one example, the scaling function is defined as follows: $σ \left(f\right) = {\sum }_{j} \frac{f ‴}{{f}_{j}^{‴}}$ with **f**'=log(**f**), **f**"= **f**' - 〈**f**'〉 and **f**‴= ReLu(**f**"), wherein, if *fⱼ =* 0, *σ*(*fⱼ*) is set to zero and *fⱼ* removed from the rest of the calculation (to ensure that the resulting function is well defined everywhere).

The number of runs Nᵢ(σ(**f**)) for each of the initial states |*ψᵢ*〉 for the second quantum circuit layer 110-2 is then determined from the scaled intermediate processing result, e.g., by multiplication with the total number of runs for the second quantum circuit layer 110-2 and appropriate rounding to, e.g., the next integer. In step 508, the second quantum circuit layer 110-2 is then run N; times for each of the initial states |*ψᵢ*〉, e.g., similar to step 504. In each run, the respective initial state is prepared in the qubit register 102, e.g., by stage 108-2 of the multi-layer quantum circuit 400 using the state preparation module 108. The second quantum circuit layer 110-2 is then run (e.g., by the quantum circuit module 109) with the respective initial state an input, yielding the evolved state *U*|*ψᵢ*〉 as an output. One or more observables *O*ⱼ are measured on this output, e.g., by stage 112-2 of the multi-layer quantum circuit 400 using the measurement module 112, yielding a measurement outcome Wⱼᵢ (for observable *O*ⱼ and initial state |*ψᵢ*〉, wherein the observables Oⱼ for the second quantum circuit layer may or may not be the same as for the first quantum circuit layer). Based on the individual measurement outcomes, a final processing result is determined (e.g., by stage 402-3 of the multi-layer quantum circuit 400 using the processing system 12). The final processing result may for example also be obtained by averaging the measurement outcomes of all runs (such that each of the initial states contributes according to the weights pⱼ= σ(*fⱼ*) encoding the intermediate processing result). Optionally, the final processing result may again be scaled by a non-linear scaling function, e.g., similar to step 506.

The multi-layer quantum circuit 400 may comprise one or more additional quantum circuit layers implemented similar to the first and second quantum circuit layers 110-1, 110-2, e.g., at least a third quantum circuit layer following the second quantum circuit layer 110-2 and receiving the (e.g., scaled) processing result of the second quantum circuit layer as an input for further processing. Accordingly, the method 500 may also comprise additional steps, for example repeating steps 506 and 508 for the third and any (optional) subsequent quantum circuit layers.

The method 500 is not limited to the order of execution implied by the flow diagram in Fig. 5. As far as technically feasible, the method 500 may be executed in an arbitrary order and steps thereof may also be executed simultaneously at least in part. For example, the plurality of runs of the first quantum circuit layer 110-1 in step 504 to determine the measurement outcomes W; and therefrom the (intermediate) processing result f do not necessarily have to all be performed prior to running the second quantum circuit layer 110-2 in step 508. Instead, steps 504 to 508 may for example be performed sequentially for some or all of the initial states |*ψᵢ*〉 (e.g., by first performing steps 504 to 508 for a first initial state |*ψᵢ*〉, then for a second initial state |*ψᵢ*〉 and so on). For example, one may determine an expectation value <Wᵢ> for the respective initial state by running the first quantum circuit layer (step 504), perform a shot-based quantum encoding for the second quantum circuit layer based on this expectation value (step 506) and then determine a processing result (e.g., an expectation value) for the respective initial state by running the second quantum circuit layer (step 508). Subsequently, this may be repeated for the other initial states and a final processing result may be determined based on the processing results (e.g., expectation values) of the individual initial states, e.g., by weighted-averaging and, optionally, non-linear scaling.

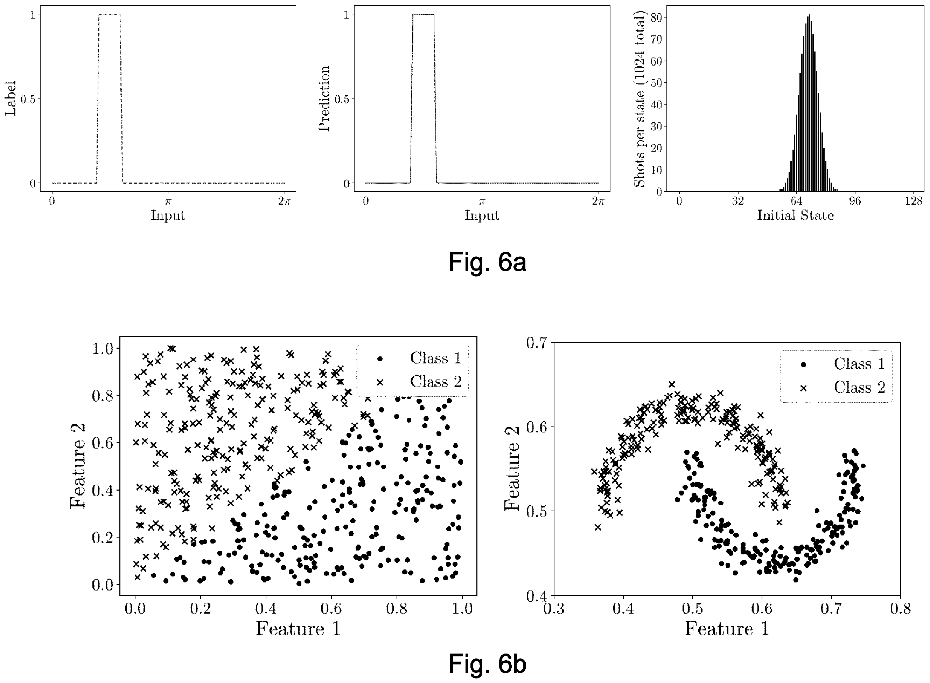

Figs. 6a and 6b illustrate exemplary implementations of the present invention and its application to exemplary classification tasks. In the example of Fig. 6a, the proposed shot-based quantum encoding is used for learning the one-dimensional top-hat function shown in the left panel (dashed line) with the prediction of the model after training being shown in the center panel (solid line). For this, a quantum circuit with a single layer and 7 qubits was employed, wherein the data points were encoded in the 2⁷ = 128 basis states of the qubits using a Gaussian distribution with a standard deviation of 32 states and a mean corresponding to the data point itself (i.e., linearly mapping the input range [0, 2π[ onto the indexed global basis states 0〉, |1〉,... |127〉), see the right panel of Fig. 6a. The single-layer model with the 7 qubits was trained for 300 epochs and reached a final test loss of 4.7 × 10⁻⁷ binary cross entropy with a test accuracy of 100%. Since most variational quantum circuits output (truncated) Fourier series, the top-hat function is a difficult function to learn for variational quantum circuits when using conventional encoding schemes.

Fig. 6b illustrates two further examples of well-known classification tasks. The left panel shows a linearly separable two-dimensional data set with two features "Feature 1" (x₁) and "Feature 2" (x₂). This is again a type of data that many quantum circuits struggle to classify using conventional encoding schemes. Using the short-based encoding proposed herein, this data set can for example be encoded using a set of three initial states, wherein the weight of the first state is half the first feature, p₁ = x₁/2, the weight of the second state is half the second feature, p₂ = x₂/2, and any remainder is put into the weight of the third state, p₃ = 1 - (x₁ + x₂)/2. A single-layered model with 5 qubits trained for 300 epochs reached a final test loss of 1.2 × 10⁻⁴ binary cross entropy with a test accuracy of 100%.

The right panel of Fig. 6b shows the two-dimensional "make moons" data set from the SciKitLearn Python Machine Learning Library (http://scikit-learn.org). Encoding this data set in the same way as for the left panel of Fig. 6b, a model with four layers and 7 qubits after training for 200 epochs reached a final test loss of 5.4 × 10⁻³ binary cross entropy with a test accuracy of 100%.

As another example, images such as those from the Modified National Institute of Standards and Technology (MNIST) database, which contains 28 × 28 pixel images of handwritten digits, can for example be encoded as follows: Choosing a set of initial states containing at least the same number of states as pixels in the images (e.g., in case of the MNIST database 10 qubits with 2¹⁰ = 1024 basis states for 784 pixels), each pixel can be assigned a particular initial state and the weight of the respective initial state can be chosen based on (e.g., to be proportional to) the darkness value of the pixel. Using this encoding, a model with four layers with a variable number of qubits per layer (10 qubits in the first layer, 7 qubits in each of the second and third layers and 4 qubits in the fourth layer with the data from each layer being truncated appropriately to fit into the next layer's 2ⁿ basis states) trained for 200 epochs reached a final test accuracy of 95%, for example. This accuracy is remarkable for a model without convolution layers for preprocessing and exemplifies how well-suited the proposed short-based encoding is for data with a large number of features.

The embodiments of the present invention disclosed herein only constitute specific examples for illustration purposes and are not to be understood as implying any limitation. The present invention can be implemented in various ways and with many modifications without altering the underlying basic properties. Therefore, the present invention is defined solely by the appended claims.

### LIST OF REFERENCE SIGNS

10 - hybrid quantum-classical computing system
12 - processing system
100 - quantum computing hardware
102 - qubit register
104 - qubits
106 - qubit manipulation means
108 - state preparation module
109 - quantum circuit module
110 - quantum circuit
112 - measurement module
200, 300, 500 - method of encoding a data point for processing by a quantum circuit
400 - multi-layer quantum circuit
402-1 - first shot-based quantum encoding stage
108-1, 108-2 - initial state preparation stages
110-1 - first quantum circuit layer
110-2 - second quantum circuit layer
112-1,112-2 - measurement stages
402-2 - non-linear scaling and second shot-based quantum encoding stage
402-3 - processing result determination stage

## Claims

1. A method (200, 300, 500) of encoding a data point (x) for processing by a quantum circuit (110, 400), in particular a variational quantum circuit, the method (200, 300, 500) comprising:
mapping the data point (x) onto a weight distribution assigning a respective weight (pᵢ) to each of a set of initial states for the quantum circuit (110, 400),
for some or all of the initial states, repeatedly running the quantum circuit (110, 400) using the respective initial state as an input to the quantum circuit (110, 400) to determine a measurement outcome (Wᵢ) of an observable for the respective initial state based on an output of the quantum circuit (110, 400); and
determining a processing result (f) for the data point (x) based on the determined measurement outcomes (Wᵢ) and the weight distribution.

2. The method (200, 300, 500) of claim 1, further comprising determining a respective number (Nᵢ) of runs for each of the initial states based on the weight distribution, wherein the quantum circuit (110, 400) is run the respective number (Nᵢ) of runs for each of the initial states and the processing result (f) is determined by averaging the determined measurement outcomes (Wᵢ) from each of the runs of the quantum circuit (110,400).

3. The method (200, 300, 500) of claim 2, wherein the number (Nᵢ) of runs for a given initial states corresponds to the weight (pᵢ) assigned to the respective initial state in the weight distribution multiplied by a total number (N) of runs for all initial states.

4. The method (200, 300, 500) of any one of the preceding claims, wherein the method (200, 300, 500) further comprises determining an expectation value of the observable for each of said some or all of the initial states based on the determined measurement outcomes (Wᵢ), in particular wherein the processing result (f) is determined based on the determined expectation values and the weight distribution.

5. The method (200, 300, 500) of any one of the preceding claims, wherein the data point (x) comprises a feature set of one or more features and the mapping for mapping the data point (x) onto the weight distribution uniquely associates each feature set with a corresponding weight distribution.

6. The method (200, 300, 500) of any one of the preceding claims, wherein:
preparation of the initial states as the input to the quantum circuit (110, 400) involves no more than five state transformations, preferably no more than three state transformations, most preferably no more than two state transformations and/or no more than five applications of quantum gates, preferably no more than three applications of quantum gates, most preferably no more than two applications of quantum gates; and/or
preparation of the initial states as the input to the quantum circuit (110, 400) only involves single-qubit state transformations and/or single-qubit quantum gates.

7. The method (200, 300, 500) of any one of the preceding claims, wherein the set of initial states is or comprises a set of basis states of the quantum circuit (110, 400), in particular a set of basis states of a plurality of qubits (104) of the quantum circuit (110, 400).

8. The method (200, 300, 500) of any one of the preceding claims, further comprising applying a non-linear scaling function (σ) on the determined processing result (f).

9. The method (200, 300, 500) of claim 7, wherein the non-linear scaling function (σ) maps the determined processing result (f) onto a probability mass function.

10. The method (200, 300, 500) of any one of the preceding claims, wherein the quantum circuit (110, 400) comprises a plurality of quantum gates acting on a plurality of qubits (104), in particular wherein said qubits (104) are implemented using one or more of superconducting qubits, trapped ion qubits, neutral atom qubits and/or photonic qubits.

11. The method (200, 300, 500) of any one of the preceding claims, wherein the quantum circuit forms a layer (110-1) of a multi-layer quantum circuit (400) and the method (200, 300, 500) further comprises deriving an input for a subsequent layer (110-2) of the multi-layer quantum circuit (400) from the determined processing result.

12. The method (200, 300, 500) of claim 11, wherein deriving the input for the subsequent layer (110-2) of the multi-layer quantum circuit (400) from the determined processing result (f) comprises mapping the determined processing result (f) onto a subsequent-layer weight distribution assigning a respective weight to each of a set of subsequent-layer initial states for the subsequent layer (110-2) of the multi-layer quantum circuit (400) and the method (200, 300, 500) further comprises:
for some or all of the subsequent-layer initial states, repeatedly running the subsequent layer (110-2) of the multi-layer quantum circuit (400) using the respective subsequent-layer initial state as an input to the subsequent layer (110-2) of the multi-layer quantum circuit (400) to determine a subsequent-layer measurement outcome (Wᵢ) of an observable for the respective subsequent-layer initial state based on an output of the subsequent layer (110-2) of the multi-layer quantum circuit (400); and
determining a subsequent-layer processing result (f) for the data point (x) based on the determined subsequent-layer measurement outcomes (Wᵢ) and the subsequent-layer weight distribution.

13. A processing system (12) for encoding a data point (x) for processing by a quantum circuit (110, 400), wherein said processing system (12) is configured to control quantum computing hardware (100) for implementing said quantum circuit (110, 400) and to execute a method (200, 300, 500) according to any one of the preceding claims using said quantum computing hardware (100).

14. A hybrid quantum-classical computing system (10) comprising the processing system (12) of claim 13 and quantum computing hardware (100) configured to implement said quantum circuit (110, 400).

15. A computer program comprising machine-readable instructions which, when executed by a processing unit, cause the processing unit to execute a method (200, 300, 500) according to any one of claims 1-12 and/or to implement a processing system (12) according to claim 13.
